# EUROPEAN PATENT SPECIFICATION

(11) **EP 3 620 488 B1**
(45) Date of publication and mention of the grant of the patent: **06.08.2025**
(21) Application number: 19195941.0
(22) Date of filing: 06.09.2019
(51) Int. Cl.: C08L 51/04, C08K 3/04, C08L 53/02, C08L 23/06, C08J 3/22, C08K 5/098, C08K 5/20, C08L 25/06, C08L 83/04, C08K 7/06

(54) **ELECTRICALLY CONDUCTIVE RESIN COMPOSITION AND PREPARATION METHOD THEREOF**
ELEKTRISCH LEITFÄHIGE HARZZUSAMMENSETZUNG UND HERSTELLUNGSVERFAHREN DAFÜR
COMPOSITION DE RÉSINE ÉLECTROCONDUCTRICE ET SON PROCÉDÉ DE PRÉPARATION

(30) Priority: 07.09.2018 KR 20180106881
(43) Date of publication of application: 11.03.2020
(73) Proprietor: Korea Kumho Petrochemical Co., Ltd., Seoul 04542 (KR)
(72) Inventor: LEE, Wang Sun, 34048 Daejeon (KR); HWANG, Ho Soo, 34071 Daejeon (KR)
(74) Representative: M. Zardi & Co S.A.

(56) References cited:
- EP-A1- 2 804 898
- WO-A1-2013/111862
- WO-A1-2014/163255
- KR-A- 20180 015 501
- US-A1- 2017 287 584

## Description

### 1. Technical Field

The present invention relates to an electrically conductive resin composition and a preparation method thereof, and more particularly to: an electrically conductive resin composition, which can be molded into a product with excellent flexural properties; and a preparation method thereof.

In addition, the present invention relates to: an electrically conductive resin composition, which can be molded into a product in which the sloughing phenomenon caused by the separation of the conductive filler has been minimized; and a preparation method thereof.

### 2. Discussion of Related Art

A thermoplastic resin refers to a plastic polymer material that softens and shows plasticity when heated and solidifies when cooled. Since such thermoplastic resins have excellent processability and excellent moldability, they are widely applied to various products such as household products, office automation equipment, electrical and electronic products, automotive parts, and the like.

In addition, attempts have been made to use thermoplastic resins as a high value-added material by imparting special properties to the same according to the types and characteristics of products to which the resins are to be applied.

In particular, when a thermoplastic resin is to be applied to an area in which the resin product is expected to rub against another resin product or other materials and thus be damaged or contaminated due to the generation of static electricity, there is a need to impart electrical conductivity (hereinafter, simply referred to as "conductivity") to the thermoplastic resin.

Conventionally, in order to impart conductivity to a conventional thermoplastic resin as such, conductive fillers such as carbon nanotubes, carbon black, graphite, carbon fibers, metal powder, metal-coated inorganic powder, or metal fibers have been used.

For example, US Patent Registration No. 4478903, Korean Patent Registration No. 10-0330200, and the like disclose a conductive composite material in which carbon black is mixed with a thermoplastic resin such as polystyrene or acrylonitrile butadiene styrene (ABS). However, in this case, due to the use of an excessive amount of carbon black, which is required to impart the required level of conductivity, the inherent mechanical properties of the thermoplastic resin, in particular, impact resistance, may not be sufficiently exhibited.

In addition, when the conductive composite material is molded into the shape of a sheet, since the skin layer is as thick as 10% to 20% of the thickness of the core layer, when the overall sheet thickness is adjusted differently or the skin layer is made thinner, there may be a conductivity variance according to region, and due to the excessive amount of carbon black, unnecessary particles may remain on the surface of the sheet after the molding process, adversely affecting the surface properties of the product.

In addition, Korean Patent Registration No. 10-1204030 discloses a resin composition for a semiconductor chip tray, which contains polyphenylene ether at 50 wt% to 65 wt%, impact-resistant polystyrene at 10 wt% to 20 wt%, carbon nanotubes at 1 wt% to 3 wt%, and the like. Although the above-described resin composition is thermoplastic in nature and thus should have the ability to be freely molded into the shape of the final product, when it is molded into a product, the dispersion of the carbon nanotubes therein tends to become less uniform in bent portions, where high elongation is required, compared to in planar portions, such that conductivity is significantly lowered or cracking occurs in the bent portions. Therefore, the resin composition is not easily applicable to products, parts, and the like which require sophisticated molding, and cannot provide the required level of flexural strength and impact resistance for sheets which are made thinner by high elongation.

Further example of electrically conductive resin composition and method of preparing same according to the prior art are known from KR 20180015501 and US 2017/287584.

### SUMMARY OF THE INVENTION

An electrically conductive resin composition according to the present invention is claimed in claim 1.

Advantageous embodiments of the electrically conductive resin are claimed in claims from 2 to 12.

A method for preparing an electrically conductive resin composition according to the present invention is claimed in claim 13.

Advantageous embodiments of the method are claimed in claims from 14 to 16.

The conductive resin composition can be molded into a product having excellent flexural properties and in which the sloughing phenomenon caused by the separation of the conductive filler is minimized.

The conductive resin composition contains: a first copolymer having an average rubber particle diameter of 1 µm to 5 µm, at 5 wt% to 30 wt%; a second copolymer having an average rubber particle diameter of 0.1 µm to 1 µm, at 25 wt% to 60 wt%; a conductive filler at 1 wt% to 15 wt%; a rubber component at 4 wt% to 20 wt%; and an olefin-based polymer at 4 wt% to 20 wt%.

The first copolymer and the second copolymer is a styrene-butadiene copolymer.

The conductive filler in an embodiment not part of the present invention may be one selected from the group consisting of a carbon nanotube, a fullerene, graphene, graphite, a carbon fiber, carbon black, and a mixture of two or more of those listed above. According to the invention, the conductive filler is a mixture of carbon nanotube and carbon black.

According to one exemplary embodiment, the rubber component may be one selected from the group consisting of butadiene rubber, isoprene rubber, styrene-butadiene-styrene rubber, styrene-isoprene-styrene rubber, acrylonitrile-butadiene rubber, styrene-butadiene rubber, ethylene-propylene rubber, styrene-ethylene-butadiene-styrene rubber, and a mixture of two or more of those listed above.

According to one exemplary embodiment, the rubber component may be a mixture of styrene-butadiene-styrene rubber and styrene-ethylene-butadiene-styrene rubber, wherein the styrene-butadiene-styrene rubber and the styrene-ethylene-butadiene-styrene rubber may be mixed in a weight ratio of 1:1 to 3.

According to one exemplary embodiment, the conductive resin composition may further contain polystyrene.

According to one exemplary embodiment, the content of the polystyrene may be 10 wt% to 30 wt% based on the total weight of the conductive resin composition.

According to one exemplary embodiment, the olefin-based polymer may be one selected from the group consisting of low-density polyethylene, linear low-density polyethylene, high-density polyethylene, a polyethylene copolymer, polypropylene, polymethylpentene, polyphenylene sulfide, and a mixture of two or more of those listed above.

The rubber component and the olefin-based polymer are in a weight ratio of 1:1 to 3.

According to one exemplary embodiment, the conductive resin composition may further contain a metal salt and stearamide.

According to one exemplary embodiment, the metal salt may be one selected from the group consisting of calcium stearate, barium stearate, lead stearate, magnesium stearate, zinc stearate, and a mixture of two or more of those listed above.

According to one exemplary embodiment, the content of each of the metal salt and the stearamide may be 1 wt% to 5 wt% based on the total weight of the conductive resin composition.

According to one exemplary embodiment, the conductive resin composition may further contain a silicone oil.

According to one exemplary embodiment, the silicone oil may be one selected from the group consisting of a dimethyl silicone oil, a methylhydrogen silicone oil, an ester-modified silicone oil, a hydroxy silicone oil, a carbinol-modified silicone oil, a vinyl silicone oil, a silicone acrylate, and a mixture of two or more of those listed above.

According to one exemplary embodiment, the content of the silicone oil may be 0.5 wt% to 5 wt% based on the total weight of the conductive resin composition.

The method of preparing the conductive resin composition includes: a step (a) of preparing a masterbatch by mixing the first copolymer having the average rubber particle diameter of 1 µm to 5 µm with the conductive filler; and a step (b) of mixing the masterbatch with the second copolymer having the average rubber particle diameter of 0.1 µm to 1 µm, the rubber component, and the olefin-based polymer.

The conductive filler is further added in the step (b).

Polystyrene is further added in the step (b).

According to one exemplary embodiment, a metal salt and a silicone oil may be further added in the step (a).

According to one exemplary embodiment, stearamide may be further added in the step (b).

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:

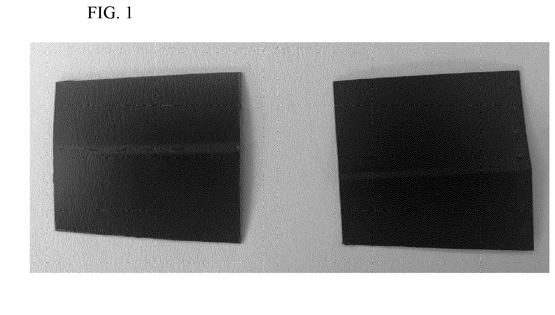

FIG. 1 is an image taken after bending the specimens produced from the conductive resin compositions of an example of the present invention and a comparative example, wherein the specimen of the comparative example is shown on the left and the specimen of the example of the present invention is shown on the right.

### DETAILED DESCRIPTION OF EXEMPLARY EMBODIMENTS

Hereinafter, the present invention will be described based on exemplary embodiments, but additional contents not described through the embodiments will also be supplemented..

Throughout this specification, when a part is mentioned as being "connected" to another part, this means that the part may not only be "directly connected" to the other part but may also be "indirectly connected" to the other part through another member interposed therebetween. In addition, when a part is mentioned as "including" a specific component, this does not preclude the possibility of the presence of other component(s) in the part but means that the part may further include the other component(s), unless otherwise stated.

When a numerical value is presented herein, the value has the precision of the significant digit provided in accordance with the standard rules in chemistry for significant digits unless its specific range is stated otherwise. For example, the numerical value 10 includes the range of 5.0 to 14.9 and the numerical value 10.0 includes the range of 9.50 to 10.49.

### Conductive resin composition

The conductive resin composition as disclosed contains: a first copolymer having an average rubber particle diameter of 1 µm to 5 µm, at 5 wt% to 30 wt%; a second copolymer having an average rubber particle diameter of 0.1 µm to 1 µm, at 20 wt% to 60 wt%; a conductive filler at 1 wt% to 15 wt%; a rubber component at 4 wt% to 20 wt%; and an olefin-based polymer at 4 wt% to 20 wt%. Here, the unit "wt%" is based on the total weight of the conductive resin composition.

The first copolymer and the second copolymer are styrene-butadiene copolymer. As used herein, the term "styrene-butadiene copolymer" refers to typical high-impact polystyrene (HIPS) and may be interpreted as a rubber-modified styrene-based copolymer or rubber-modified polystyrene.

The first copolymer has an average rubber particle diameter of 1 µm to 5 µm, and the content of butadiene, which is the rubber component, may be 7.5 wt% to 9 wt% based on the total weight of the copolymer. Since the first copolymer has a relatively large average rubber particle diameter and the first copolymer may be used in the form of a mixture with an excessive amount of a mineral oil (about 3 wt% to 5 wt%) as necessary, high fluidity may be exhibited.

The content of the first copolymer is 5 wt% to 30 wt% and preferably 10 wt% to 20 wt% based on the total weight of the conductive resin composition. In this case, the content of the first copolymer may be 5 wt% or more, 7.5 wt% or more, or 10 wt% or more, and 30 wt% or less, 25 wt% or less, or 20 wt% or less based on the total weight of the conductive resin composition. In an embodiment not claimed in the present invention, when the content of the first copolymer is less than 5 wt%, since fluidity is lowered, moldability may be lowered. On the other hand, in another embodiment not claimed in the present invention, when the content of the first copolymer is more than 30 wt%, the mechanical properties of the molded article produced from the conductive resin composition may be adversely affected.

The second copolymer has an average rubber particle diameter of 0.1 µm to 1 µm, and the content of butadiene, which is the rubber component, may be 7.5 wt% to 8.5 wt% based on the total weight of the copolymer. The second copolymer may have high gloss and high impact-resistant properties. This is because the average rubber particle diameter of the second copolymer is relatively small compared to that of the first copolymer and the second copolymer may be used in the form of a mixture with a small amount of a mineral oil (about 0.5 wt% to 3 wt%) as necessary.

The content of the second copolymer is 25 wt% to 60 wt% based on the total weight of the conductive resin composition, and is preferably 25 wt% to 30 wt% or 50 wt% to 60 wt% depending on the content of other components. In an embodiment not part of the present invention, when the content of the second copolymer is less than 20 wt%, the surface properties and mechanical properties of the molded article may be adversely affected. On the other hand, in another embodiment not part of the present invention, when the content of the second copolymer is more than 60 wt%, since the fluidity of the composition is lowered, moldability may be lowered.

The conductive resin composition contains the conductive filler in an amount of 1 wt% to 15 wt% and preferably 1 wt% to 5 wt% or 5 wt% to 10 wt% depending on the content of other components. In an embodiment not part of the present invention, when the conductive filler is used in an amount of less than 1 wt%, the effect of imparting conductivity to the resin or to the product may be insignificant. On the other hand, in another embodiment not part of the present invention, when the conductive filler is used in an amount of more than 15 wt%, the moldability of the resin composition and the mechanical properties of the molded article may be adversely affected because the relative contents of the first and second copolymer components, the rubber component, and the olefin-based polymer component have been reduced or become imbalanced, and dispersibility may be lowered due to the aggregation of the conductive filler.

In an embodiment not part of the present invention, the conductive filler may be one selected from the group consisting of a carbon nanotube, a fullerene, graphene, graphite, a carbon fiber, carbon black, and a mixture of two or more of those listed above. According to the invention, the conductive filler is a mixture of a carbon nanotube and carbon black in consideration of the ease of kneading with the copolymers, conductivity, and economic efficiency.

The carbon nanotube is a material for imparting conductivity to a copolymer resin having low inherent conductivity. Since the carbon nanotube reduces the surface resistance of the molded article, the conductivity of the molded article, and accordingly the antistatic properties of the same, can be improved.

Specifically, when the carbon nanotube is mixed with a copolymer resin, the individual carbon nanotubes form a continuous three-dimensional network structure in the copolymer resin by being dispersed and interconnected, and therefore, excellent conductivity results.

Examples of the method of synthesizing the carbon nanotube include arc-discharge, pyrolysis, laser vaporization, plasma chemical vapor deposition, thermal chemical vapor deposition, and the like, but any type of carbon nanotube may be used regardless of the synthesis method.

In addition, the carbon nanotube may be one selected from the group consisting of single-walled carbon nanotubes, double-walled carbon nanotubes, multi-walled carbon nanotubes (as classified according to the number of walls), cup-stacked carbon nanofiber in which a plurality of truncated conical graphene layers are stacked, and a mixture of two or more of those listed above, and is preferably a multi-walled carbon nanotube in consideration of the great ease of preparation and excellent economic efficiency thereof, but the present invention is not limited thereto.

The carbon nanotube may have an average outer diameter of 8 nm to 50 nm and an average inner diameter which is at least 40% and preferably 40% to 90% of the average outer diameter. Here, the outer diameter refers to the diameter of a cross-section of the carbon nanotube, which is measured by including the graphite layer constituting the wall of the carbon nanotube, and the inner diameter refers to the diameter of a cross-section of a hollow portion of the carbon nanotube, which is measured by excluding the graphite layer.

When a carbon nanotube having an average single-nanotube outer diameter of less than 8 nm or more than 50 nm is used, the average bundle diameter of a carbon nanotube aggregate formed of the individual carbon nanotubes does not fall in the range to be described below, and therefore, it is preferable to use a carbon nanotube having an outer diameter of 8 nm to 50 nm. As used herein, the term "bundle" refers to a carbon nanotube aggregate in the form of a bundle (i.e., a plurality of the carbon nanotubes are arranged side by side) or a rope (i.e., a plurality of the carbon nanotubes are intertwined). On the other hand, a plurality of carbon nanotubes which have been aggregated without forming a regular structure is referred to as a "non-bundle type."

In addition, the higher the carbon content of the carbon nanotube, the fewer the impurities (e.g., a catalyst) in the carbon nanotube, and therefore, higher conductivity can be realized. The carbon content of the carbon nanotube may be 95% or more, preferably 95% to 98%, and more preferably 95% to 97%.

When the purity of carbon in the carbon nanotube is less than 95%, crystallinity may be lowered because a structural defect is induced in the carbon nanotube, and the carbon nanotube may be easily broken and destroyed by external stimuli.

Meanwhile, a bundle-type carbon nanotube aggregate formed of the above-described individual carbon nanotubes may have an average bundle diameter of 1 µm to 10 µm, preferably 1 µm to 5 µm, and more preferably 2 µm to 4 µm, and an average bundle length of 10 µm to 100 µm, preferably 20 µm to 60 µm, and more preferably 25 µm to 55 µm.

When the carbon nanotube aggregate has an average bundle diameter of less than 1 µm or an average bundle length of more than 100 µm, dispersibility is lowered such that the conductive resin composition may not have uniform conductivity throughout the entire region. On the other hand, when the carbon nanotube aggregate has an average bundle diameter of more than 10 µm or an average bundle length of less than 10 µm, as the network structure becomes unstable, conductivity may be lowered.

The carbon black can impart conductivity to the conductive resin composition, and by being incorporated into the copolymer resin, can reinforce the mechanical properties of the conductive resin composition and the molded article in an economical way.

The conductive filler is a mixture of a carbon nanotube and carbon black, the carbon nanotube and the carbon black is mixed in a weight ratio of 1:1 to 6. In an embodiment not part of the present invention, when the carbon black is used in an amount of less than 1 part by weight with respect to 1 part by weight of the carbon nanotube, the above-described effect of the carbon black may not be sufficiently realized. On the other hand, in another embodiment not part of the present invention, when the carbon black is used in an amount of more than 6 parts by weight with respect to 1 part by weight of the carbon nanotube, the impact resistance of the molded article may be adversely affected, the carbon dust formed due to the abrasion of carbon black may contaminate the surface of the molded article, and the increased specific gravity of the conductive resin composition may lead to a reduction in molded article productivity.

The conductive resin composition contains the rubber component in an amount of 4 wt% to 20 wt%. The rubber component may improve the elongation and impact strength of the conductive resin composition and the molded article by compensating for the hard characteristics of the resin including the first and second copolymers. In an embodiment not part of the present invention, when the content of the rubber component is less than 4 wt%, impact resistance may be lowered. On the other hand, in another embodiment not part of the present invention, when the content of the rubber component is more than 20 wt%, the sloughing phenomenon may occur, or moldability may be lowered.

The rubber component may be one selected from the group consisting of butadiene rubber, isoprene rubber, styrene-butadiene-styrene rubber, styrene-isoprene-styrene rubber, acrylonitrile-butadiene rubber, styrene-butadiene rubber, ethylene-propylene rubber, styrene-ethylene-butadiene-styrene rubber, and a mixture of two or more of those listed above, and is preferably styrene-butadiene-styrene rubber or a mixture of styrene-butadiene-styrene rubber and styrene-ethylene-butadiene-styrene rubber depending on the area of application, but the present invention is not limited thereto.

For example, when the final molded article to be produced from the conductive resin composition is a tube, the required properties can be fulfilled using styrene-butadiene-styrene rubber. On the other hand, when the molded article is a tape reel or the like produced by laminating or welding primary molded articles, a molded article suitable for the intended area of application can be produced using a mixture of styrene-butadiene-styrene rubber and styrene-ethylene-butadiene-styrene rubber.

When the rubber component is a mixture of styrene-butadiene-styrene rubber and styrene-ethylene-butadiene-styrene rubber, the styrene-butadiene-styrene rubber and the styrene-ethylene-butadiene-styrene rubber is mixed in a weight ratio of 1:1 to 3. In an embodiment not part of the present invention, when the styrene-ethylene-butadiene-styrene rubber is used in an amount of less than 1 part by weight with respect to 1 part by weight of the styrene-butadiene-styrene rubber, sloughing referring to a phenomenon in which the random separation of the conductive filler causes unnecessary dust to remain on the surface of the final product may occur, and the conductive resin composition may exhibit poor extrudability. In another embodiment not part of the present invention, on the other hand, when the styrene-ethylene-butadiene-styrene rubber is used in an amount of more than 3 parts by weight with respect to 1 part by weight of the styrene-butadiene-styrene rubber, the mechanical properties of the final molded article may be adversely affected.

The conductive resin composition may further contain polystyrene. As used herein, the term "polystyrene" refers to a polymer resulting from the homopolymerization of styrene monomers. That is, the polystyrene does not include any monomer constituting a rubber component in addition to the styrene monomer. Therefore, the polystyrene can impart stiffness, resilience, and heat resistance to the conductive resin composition and the molded article.

In particular, when the molded article to be produced from the conductive resin composition is a tape reel or the like, the parallel arrangement of the side portions for holding the tape in place should be continuously maintained. When the parallel arrangement of the side portions is not maintained but is randomly disrupted to cause an unnecessary inclination, a defect in the lamination or welding of the primary molded articles may occur. In this case, it may be possible to impart the required stiffness and resilience to the tape reel by further adding a specific amount of the polystyrene to the conductive resin composition. By further adding the polystyrene and using a mixture of styrene-butadiene-styrene rubber and styrene-ethylene-butadiene-styrene rubber as the rubber component, it is possible to further improve the flexural strength and sloughing resistance of the final molded article.

The content of the polystyrene may be 10 wt% to 30 wt% and preferably 20 wt% to 30 wt% based on the total weight of the conductive resin composition. When the content of the polystyrene is less than 10 wt%, the required stiffness and heat resistance cannot be imparted to the conductive resin composition or to the molded article. On the other hand, when the content of the polystyrene is more than 30 wt%, since the relative content of the rubber component in the conductive resin composition has been reduced, the elongation and impact strength of the molded article may be adversely affected.

The polystyrene has a tensile strength of 400 kgf/cm² to 600 kgf/cm² and a flexural strength of 800 kgf/cm² to 1,000 kgf/cm², which are higher than those of the first and second styrene-butadiene copolymers. When the tensile strength and flexural strength of the polystyrene do not fall in the above-described ranges, the required stiffness and resilience cannot be imparted to the conductive resin composition or to the molded article.

The olefin-based polymer contained in the conductive resin composition improves the elongation and impact strength of the conductive resin composition and the molded article by compensating for the hard characteristics of the first and second styrene-butadiene copolymers.

The olefin-based polymer is used in an amount of 4 wt% to 20 wt% and preferably 6 wt% to 12 wt% based on the total weight of the conductive resin composition. In this case, the olefin-based polymer is used in an amount of 4 wt% or more, 5 wt% or more, or 6 wt% or more, and 20 wt% or less, 16 wt% or less, or 12 wt% or less based on the total weight of the conductive resin composition. In an embodiment not part of the present invention, when the content of the olefin-based polymer is less than 4 wt%, since the dispersibility of the conductive filler is lowered, the final product may exhibit an increased conductivity variance according to region. In an embodiment not part of the present invention, on the other hand, when the content of the olefin-based polymer is more than 20 wt%, productivity, processability, and workability may be adversely affected due to the occurrence of die build-up and/or surging during the molding of a product.

The olefin-based polymer may be one selected from the group consisting of low-density polyethylene, linear low-density polyethylene, high-density polyethylene, a polyethylene copolymer, polypropylene, polymethylpentene, polyphenylene sulfide, and a mixture of two or more of those listed above, and is preferably high-density polyethylene (HDPE), but the present invention is not limited thereto.

In addition, the polyethylene copolymer may be one selected from the group consisting of ethylene vinyl acetate, ethylene butyl acrylate, ethylene ethyl acrylate, and a mixture of two or more of those listed above, but the present invention is not limited thereto.

That is, the polyolefin-based polymer resin may be a homopolymer resulting from the polymerization of only one type of monomer or a copolymer resulting from the polymerization of two or more types of monomers. In this case, the copolymer may be an alternating copolymer, a random copolymer, a block copolymer, or a graft copolymer, regardless of the type of copolymerization.

In addition, the olefin-based polymer can prevent the extrudability degradation and sloughing phenomenon caused by the rubber component, and the rubber component and the olefin-based polymer are mixed in a weight ratio of 1:1 to 3. In an embodiment not part of the present invention, when the olefin-based polymer is used in an amount of less than 1 part by weight with respect to 1 part by weight of the rubber component, the conductive resin composition may exhibit poor extrudability or decreased moldability, and when the olefin-based polymer is used in an amount of more than 3 parts by weight with respect to 1 part by weight of the rubber component, the sloughing phenomenon may occur. In another embodiment not part of the present invention, on the other hand, when the amount of the rubber component and the olefin-based polymer satisfy the above-described weight ratio range, an improvement in the flexural properties of the conductive resin composition and of the final molded article may be realized.

As described above, the first copolymer, the second copolymer, the rubber component, and the olefin-based polymer used in the conductive resin composition have mutually different characteristics and functions. However, when mixed and combined as one, they bring an improvement in both the moldability and mechanical properties of the conductive resin composition. In addition, since the dispersion of the conductive filler during the molding process is promoted, a final product having uniform conductivity throughout the entire region regardless of the shape and structure of the individual regions can be realized, and further, an improvement in the reliability and reproducibility of the product can be achieved. Moreover, it is possible to suppress the sloughing phenomenon in which the random separation of the conductive filler causes unnecessary dust to remain on the surface of the final product.

The conductive resin composition may further contain a metal salt in an amount of 1 wt% to 5 wt% and stearamide in an amount of 1 wt% to 5 wt%. When the conductive resin composition is molded into the shape of a sheet, since the metal salt can minimize the occurrence of the sloughing phenomenon, a sheet having a smooth surface can be obtained. When the content of the metal salt is less than 1 wt%, the surface properties of the sheet produced from the conductive resin composition may be adversely affected due to the development of unnecessary bumps on the surface. On the other hand, when the content of the metal salt is more than 5 wt%, conductivity may be lowered.

The metal salt may be one selected from the group consisting of calcium stearate, barium stearate, lead stearate, magnesium stearate, zinc stearate, and a mixture of two or more of those listed above, and is preferably zinc stearate, but the present invention is not limited thereto.

In addition, the stearamide can improve the fluidity of the conductive resin composition and thus minimize the conductivity variance in the molded article caused by elongation. When the content of the stearamide is less than 1 wt%, the final product may exhibit an increased conductivity variance according to region. On the other hand, when the content of the stearamide is more than 5 wt%, since the fluidity of the resin composition is excessively increased, the mechanical properties of the molded article may be adversely affected. The stearamide may be used alone or in combination with other materials such as oleamide or erucamide.

Meanwhile, the conductive resin composition may further contain a silicone oil in an amount of 0.5 wt% to 5 wt%. When the conductive resin composition is subjected to molding, since the silicone oil can minimize the occurrence of the sloughing phenomenon, a molded article having a smooth surface can be obtained. When the content of the silicone oil is less than 0.5 wt%, the surface properties of the molded article may be adversely affected due to the development of unnecessary bumps on the surface. On the other hand, when the content of the silicone oil is more than 5 wt%, the conductivity of the molded article may be lowered.

The silicone oil may be one selected from the group consisting of a dimethyl silicone oil, a methylhydrogen silicone oil, an ester-modified silicone oil, a hydroxy silicone oil, a carbinol-modified silicone oil, a vinyl silicone oil, a silicone acrylate, and a mixture of two or more of those listed above, and is preferably a dimethyl silicone oil, but the present invention is not limited thereto.

The molded article produced from the conductive resin composition may have a specific level of conductivity. For example, the molded article may have a surface resistance of 5.0 Ω/sq to 6.0 Ω/sq. In addition, the molded article may have a flexural strength of 300 kgf/cm² or more (at 2.8 mm/min) or exhibit an elongation of 60% or more. As used herein, the term "flexural strength" refers to the stress applied to the specimen at the moment of fracture during a flexural test (ASTM D790) performed at a speed of 2.8 mm/min, and the term "elongation" refers to a value calculated based on the degree of deformation between marks, which is determined by joining specimen pieces together after the fracture of the specimen due to the tensile test, and the unit of elongation is percentage (%). When the composition forms a molded article whose flexural strength and elongation are below the above-described ranges, there is a difficulty in forming a sophisticated shape or structure due to the risk of cracking in the molded article.

In addition, the molded article can be applied to various products because it can have the shape of a tube, a sheet, or a film or other similar shapes and exhibit antistatic properties by having a specific level of conductivity. For example, the molded article can be applied to a tube for power equipment, an electronic component transfer module, a semiconductor transfer tray, a carrier tape, and the like.

### Method of preparing conductive resin composition

The method of preparing a conductive resin composition according to another aspect of the present invention may include: a step (a) of preparing a masterbatch by mixing a first copolymer having an average rubber particle diameter of 1 µm to 5 µm with a conductive filler; and a step (b) of mixing the masterbatch with a second copolymer having an average rubber particle diameter of 0.1 µm to 1 µm, a rubber component, and an olefin-based polymer.

The effects, amounts, and usable types of the first copolymer, the second copolymer, the rubber component, the olefin-based polymer, and the like have been described above.

That is, for the conductive resin composition, a masterbatch is first prepared by mixing a polymer component and a conductive filler. Then, the conductive resin composition is prepared by adding another polymer component, a rubber component, and an olefin-based polymer to the masterbatch such that it has the above-described mixing ratio. In this case, the amount of the prepared masterbatch may range from 10 wt% to 50 wt% and preferably 15 wt% to 25 wt% based on the total weight of the conductive resin composition. In this case, the amount of the masterbatch may be 10 wt% or more, 12.5 wt% or more, or 15 wt% or more, and 50 wt% or less, 37.5 wt% or less, or 25 wt% or less based on the total weight of the conductive resin composition.

The conductive resin composition may basically consist of: a resin having a specific level of mechanical properties and moldability; a conductive filler capable of imparting conductivity to the resin, for example, a metal, miscellaneous inorganic materials; and the like. The conductive resin composition can be prepared by mixing the resin and the conductive filler.

There has been proposed a technique of improving the conductivity of the conventional resin composition by increasing the content of the conductive filler. However, when the content of one type of conductive filler (particularly, carbon nanotubes) is increased beyond a specific level, there is a problem in that not only the mechanical properties of the resin itself are not sufficiently exhibited but also processability, workability, and the like are adversely affected. In order to solve this problem, an attempt has been made to increase the total content of conductive filler in the conductive resin composition by using carbon nanotubes in combination with a material such as carbon black, which may be less capable of imparting conductivity than the carbon nanotubes but has higher processability and workability.

However, the above-described method merely adjusts the types and amount of conductive filler differently and is not different from the conventional method in that the mixing of the conductive filler with the resin is performed as a single process. In this regard, in the step (a), a masterbatch having the required conductive filler content may be prepared by mixing a first copolymer having an average rubber particle diameter of 1 µm to 5 µm with a conductive filler and extruding the mixture.

As used herein, the term "masterbatch" refers to a dispersion including a large amount of a filler, an additive, and the like used in the preparation of a resin composition, which is prepared in advance. Through the preparation of such a masterbatch, it is possible to improve the dispersibility of the conductive filler in the resin composition and impart uniform conductivity to the entire region of the conductive resin composition.

In this case, the masterbatch may be prepared in the form of spheres, pellets, or the like, but there is no limitation on the form of the masterbatch as long as the masterbatch can be mixed with a second copolymer, a third copolymer, and a rubber component in subsequent steps to improve the dispersibility of the conductive filler.

Meanwhile, the step (a) may be carried out at a temperature of 180 °C to 300 °C, preferably 220 °C to 240 °C, and more preferably 230 °C. When the process temperature of the step (a) is less than 180 °C, since the first copolymer is partially melted, the extrusion moldability and dispersibility of the conductive filler may be lowered. On the other hand, when the process temperature of the step (a) is more than 300°C, the first copolymer may be subjected to random thermal decomposition or denaturation.

In addition, in the step (a), the mixture of the conductive filler and the first copolymer may be extruded at a rate of 10 kg/hr to 500 kg/hr and preferably 10 kg/hr to 30 kg/hr. When the extrusion is carried out at a rate of less than 10 kg/hr, productivity may be lowered. On the other hand, when the extrusion is carried out at a rate of more than 500 kg/hr, uniform mixing of the conductive filler and the first copolymer may not be sufficiently realized.

The masterbatch, which is the product of the step (a), contains the conductive filler in a predetermined amount. For example, the masterbatch may contain the conductive filler in an amount of 1 wt% to 20 wt% and preferably 5 wt% to 15 wt%. In this case, the amount of the conductive filler may be 1 wt% or more, 2.5 wt% or more, or 5 wt% or more, and 20 wt% or less, 17.5 wt% or less, or 15 wt% or less based on the total weight of the conductive resin composition.

When the conductive filler is a carbon nanotube, the carbon nanotube may have been obtained by processing powder into pellets by mechanically and physically compressing the same, and may have an apparent density of 0.01 g/ml to 0.2 g/ml and preferably 0.05 g/ml to 0.2 g/ml after the processing. When the apparent density of the carbon nanotube does not fall in the above-described range, it is difficult to prepare a masterbatch which is enriched with carbon nanotubes by containing the carbon nanotube in an amount of 10 wt% or more. In addition, since the carbon nanotube has been processed into pellets, the generation of airborne dust during operations is prevented, and therefore, an improved working environment can be provided.

Meanwhile, in the step (a), the extruder used for extrusion may be a single-screw extruder having one screw or a multi-screw extruder having a plurality of screws, a preferable example of which is a twin-screw extruder having two screws for the uniform mixing of components and extrusion.

In this case, in order to avoid the risk of damaging the conductive filler by the above-described extruder during the kneading process, it may be preferable to perform melt-kneading by introducing the first copolymer into a twin-screw extruder using a main hopper and feeding the conductive filler to the extruder using a side feeder.

In the step (b), the relative content of the conductive filler in the masterbatch may be lowered ("let-down") through mixing with the second copolymer, the rubber component, and the olefin-based polymer. In addition, in the step (b), a conductive filler the same as or different from the conductive filler of the masterbatch and/or polystyrene may be further added. The conductive filler further added in the step (b) may be carbon black which does not adversely affect the mechanical properties, processability, and workability of the conductive resin composition, but the present invention is not limited thereto. The amount of each of the components to be introduced in the step (b) is sufficient if it is an amount capable of lowering the content of the conductive filler in the prepared conductive resin composition to the level of 1 wt% to 15 wt% through dilution.

In the step (b), the mixing of the masterbatch with the second copolymer, the rubber component, and the olefin-based polymer may be carried out by melt-compounding, in-situ polymerization, solution mixing, or the like, and is preferably carried out by melt-compounding. The melt-compounding, which allows the conductive filler to be uniformly dispersed in the resin under high-temperature and high-shear conditions using an extruder or the like, enables mass production and a reduction in production costs. The types, features, and selection criteria of the extruder and the like have been described above.

The above-described conductive resin composition prepared through the steps (a) and (b) can exhibit a higher level of balance between conductivity and mechanical properties than a conductive resin composition prepared by a conventional preparation method (e.g., a conductive resin composition, which is not prepared through masterbatch). In addition, since flexural properties are improved, the conductive resin composition can be easily molded and processed, and the conductivity variance caused by elongation can be minimized. Therefore, a final product having uniform conductivity throughout the entire region regardless of the shape and structure of the individual regions can be realized, and an improvement in the reliability and reproducibility of the product can be achieved. Moreover, it is possible to suppress the sloughing phenomenon in which the random separation of the conductive filler causes unnecessary dust to remain on the surface of the final product.

Meanwhile, a metal salt and a silicone oil may be further added in the step (a), and stearamide may be further added in the step (b). In this case, the effects, amounts, and usable types of the metal salt, the silicone oil, and the stearamide, and the like have been described above.

Hereinafter, exemplary embodiments of the present invention will be described in more detail. However, hereinafter, only experimental results obtained from a few selected exemplary embodiments of the invention will be described, and the scope and contents of the invention should not be interpreted as being reduced or limited by the few selected exemplary embodiments. The effects of each of the various embodiments of the invention which are not explicitly set forth below will be described in detail in relevant sections.

### Examples and Comparative Examples

A masterbatch was prepared by introducing 9 parts by weight of multi-walled carbon nanotubes (MWCNTs or CNTs) into the side feeder of a twin-screw extruder, feeding 80 parts by weight of a first styrene-butadiene copolymer (HIPS 1), 8 parts by weight of zinc stearate, and 3 parts by weight of a dimethyl silicone oil into the main hopper at a rate of 25 kg/hr, and then performing melt-kneading at 200 rpm and 230 °C.

The masterbatch, a second styrene-butadiene copolymer (HIPS 2), polystyrene (PS), a rubber component (styrene-butadiene-styrene rubber and/or styrene-ethylene-butadiene-styrene rubber), high-density polyethylene, carbon black, and stearamide were introduced into a twin-screw extruder according to a ratio selected from the ratios shown in the following Table 1, the melt-kneading of the same was performed at 200 rpm and 250 °C to prepare a conductive resin composition, and a sheet-type specimen for measuring properties was produced from the conductive resin composition using an injection machine. In addition, the specifications of the raw materials, including HIPS 1, are shown in the following Table 2. For Comparative Examples 1, 2, 5, and 6, HIPS 1 and a dimethyl silicone oil were used instead of the masterbatch.

**[Table 1]**

| Classification | CMB | HIPS 1 | Silicone | HIPS 2 | PS | SEBS | SBS | HDPE | CB | Additive |
|---|---|---|---|---|---|---|---|---|---|---|
| Example 1 | 20 | - | - | 50 | - | - | 9 | 11 | 8 | 2 |
| Example 2 | 20 | - | - | 54 | - | - | 7 | 9 | 8 | 2 |
| Example 3 | 20 | - | - | 46 | - | - | 11 | 13 | 8 | 2 |
| Example 4 | 20 | - | - | 52 | - | - | 8 | 10 | 8 | 2 |
| Example 5 | 20 | - | - | 25 | 25 | 7 | 3 | 15 | 3 | 2 |
| Example 6 | 20 | - | - | 25 | 26 | 7 | 3 | 14 | 3 | 2 |
| Example 7 | 20 | - | - | 27 | 24 | 7 | 3 | 14 | 3 | 2 |
| Example 8 | 20 | - | - | 25 | 25 | 8 | 3 | 14 | 3 | 2 |
| Comparative Example 1 | - | 16 | 0.6 | 50 | - | - | - | - | 29.8 | 3.6 |
| Comparative Example 2 | - | 16 | 0.6 | 50 | - | - | 10 | - | 19.8 | 3.6 |
| Comparative Example 3 | 20 | - | - | 50 | - | - | 18 | - | 10 | 2 |
| Comparative Example 4 | 20 | - | - | 50 | - | - | - | 18 | 10 | 2 |
| Comparative Example 5 | - | 16 | 0.6 | 25 | 25 | - | - | - | 29.8 | 3.6 |
| Comparative Example 6 | - | 16 | 0.6 | 25 | 25 | 4 | 6 | - | 19.8 | 3.6 |
| Comparative Example 7 | 20 | - | - | 25 | 25 | 10 | 8 | - | 10 | 2 |
| Comparative Example 8 | 20 | - | - | 25 | 25 | - | - | 23 | 5 | 2 |
| Comparative Example 9 | 20 | - | - | - | 50 | 6 | 4 | 15 | 3 | 2 |
| -CMB: Masterbatch | | | | | | | | | | |
| -SEBS: Styrene-ethylene-butadiene-styrene rubber (styrene content: 30 wt%, specific gravity: 0.91 g/cm³) | | | | | | | | | | |
| -SBS: Styrene-butadiene-styrene rubber (styrene content: 31.5 wt%, specific gravity: 0.94 g/cm³) | | | | | | | | | | |
| -HDPE: High-density polyethylene (density: 0.963 g/cm³, melt index: 0.3 g/10 min-230 °C, 2.16 kg) | | | | | | | | | | |
| -CB: Carbon black | | | | | | | | | | |
| -Additive: Stearamide | | | | | | | | | | |

| | | | | | | | | | | |
|---|---|---|---|---|---|---|---|---|---|---|
| (Units: wt%) | | | | | | | | | | |

**[Table 2]**

| Classification | HIPS 1 | HIPS 2 | PS |
|---|---|---|---|
| Main resin | Styrene-butadiene copolymer | Styrene-butadiene copolymer | Polystyrene |
| Average rubber particle diameter (µm) | 3 to 4 | 0.5 to 1.0 | - |
| Rubber (wt%) | 8.3 | 8.0 | - |
| Mineral oil (wt%) | 4.3 | 1.0 | - |
| Tensile strength (kpf/cm², 6 mm) | 260 | 370 | 540 |
| Elongation (%, 6 mm) | 40 | 55 | 3.5 |
| Impact strength (kg·cm/cm, 3.2 mm) | 9 | 12 | 1.5 |
| Melt index (g/10 min, 200 °C, 5 kg) | 9 | 4 | 3 |
| Flexural strength (kgf/cm², 2.8 mm/min) | 300 | 500 | 890 |

### Experimental Example: Property measurement of conductive resin composition

The mechanical, physical, and electrical properties of each of the sheet-type specimens produced according to the Examples and the Comparative Examples were determined, and the results are shown in the following Table 3.

**[Table 3]**

| Classification | Flexural strength (kgf/cm², 2.8 mm/min) | Impact strength (kg cm/cm, 3.2 mm) | Elongation (%, 6 mm) | Surface resistance (Ω/sq, log) | Bump size | Comments |
|---|---|---|---|---|---|---|
| Example 1 | 520 | 15.9 | 62% | 5.6 | No bumps | - |
| Example 2 | 530 | 16.4 | 60% | 5.5 | No bumps | - |
| Example 3 | 510 | 15.3 | 64% | 5.7 | No bumps | - |
| Example 4 | 520 | 16.1 | 63% | 5.6 | No bumps | - |
| Example 5 | 460 | 15.8 | 68% | 5.7 | No bumps | - |
| Example 6 | 490 | 15.4 | 64% | 5.6 | No bumps | - |
| Example 7 | 460 | 16.0 | 69% | 5.8 | No bumps | - |
| Example 8 | 500 | 16.8 | 68% | 5.6 | No bumps | - |
| Comparative Example 1 | 280 | 8.9 | 11% | 4.7 | No bumps | Cracking occurred |
| Comparative Example 2 | 340 | 11.9 | 19% | 5.5 | Large | Poorly extruded |
| Comparative Example 3 | - | - | - | - | Large | Not extruded |
| Comparative Example 4 | 290 | 16.6 | 68% | 5.7 | Large | Non-uniform conductivity |
| Comparative Example 5 | 420 | 6.3 | 8% | 4.8 | No bumps | Cracking occurred |
| Comparative Example 6 | 370 | 11.4 | 21% | 5.4 | Large | Poorly extruded |
| Comparative Example 7 | 410 | 15.7 | 43% | 5.6 | Small | - |
| Comparative Example 8 | 340 | 14.4 | 52% | 6.8 | Large | Non-uniform conductivity |
| Comparative Example 9 | 630 | 5.2 | 33% | 5.9 | No bumps | - |

Referring to Table 3, the specimens produced according to Comparative Examples 1 and 5, in which a large amount of carbon black was used as a conductive filler, exhibited excellent conductivity but had a cracking issue due to having poor impact strength. In addition, there was a problem in that the poor elongation of the conductive resin composition made the molding and application of the conductive resin composition substantially difficult. The specimens produced according to Comparative Examples 3, 4, 6, 7, and 8, in which a rubber component or high-density polyethylene was further used to improve the above-described problems, exhibited the sloughing phenomenon in which the conductive filler was separated during extrusion, transferred to the surface of the specimens, and formed large or small bumps. The occurrence of the sloughing phenomenon leads to the generation of unnecessary dust in the process of producing a product (e.g., a semiconductor, a display, or an automotive electrical part) using the sheet, and the dust causes a defect in the product. On the other hand, the above-described bumps were not observed on the surface of the specimens produced according to Examples 1 to 8, in which the conductive resin composition contained conductive fillers (carbon black and a carbon nanotube), two types of HIPSs, polystyrene, a rubber component, and an olefin-based polymer. Therefore, according to the present invention, not only the production of a product can be facilitated but also a significant improvement in the reliability and reproducibility of the produced product can be achieved.

When comparing the properties of the specimens according to Examples 1 to 8 and Comparative Examples 1 to 8, the specimens of the Comparative Examples, exhibited the formation of bumps on the surface, poor or no extrudability, or non-uniform conductivity unlike the specimens of the Examples in which the rubber component and the olefin-based polymer were harmoniously used. It was determined that the specimens according to Examples 1 to 8 had a flexural strength of 450 kgf/cm² or more and an elongation of 60% or more, which were higher than those of Comparative Examples 1 to 8. Therefore, it is expected that the conductive resin according to the present invention can be relatively easily applied, without the risk of cracking, to products, parts, and the like which require sophisticated molding.

Meanwhile, the specimen according to Comparative Example 9, in which the rubber component and the olefin-based polymer were used, exhibited excellent flexural strength and did not have an issue of sloughing or of poor extrudability. However, since an excessive amount of polystyrene was used, the impact strength and elongation of the conductive resin composition were adversely affected, making it substantially difficult to produce a product from the composition.

FIG. 1 is an image taken after bending the specimens according to Comparative Example 1 and Example 1, in which it can be visually determined that no damage was caused by the bending in the specimen of the Example (right) unlike in the specimen of the Comparative Example (left), where cracking occurred.

By containing two types of copolymers of different average rubber particle diameters, a conductive filler, a rubber component, and an olefin-based polymer, the conductive resin composition according to one aspect of the present invention can be molded into a product which can maintain its mechanical properties and has improved flexural properties.

In addition, the conductive resin composition can be molded into a product in which the sloughing phenomenon caused by the separation of the conductive filler has been minimized.

In addition, since a molded article produced from the conductive resin composition exhibits uniform conductivity throughout the entire surface thereof and also exhibits excellent elongation, the application area thereof can be further extended to include not only general products but also products, parts, and the like which require more sophisticated molding.

However, it is to be understood that the effects of the present invention are not limited to the above-described effects but include all effects deducible from the configuration of the invention described in the detailed description of the invention or in the claims.

The foregoing description of the present invention is intended for illustration, and it will be understood by those skilled in the art to which the invention pertains that the invention can be easily modified and implemented in various other forms without changing the essential features of the invention. Therefore, it should be understood that the embodiments described above are only exemplary in all aspects and not limiting. For example, each of the constituents described as being one combined entity may be implemented separately, and similarly, constituents described as being separate entities may be implemented in a combined form.

It should be understood that the scope of the present invention is defined by the following claims and that all changes or modifications derived from the meaning and scope of the claims and their equivalents are included in the scope of the claims.

## Claims

1. An electrically conductive resin composition comprising:
a first high-impact polystyrene (HIPS) having an average rubber particle diameter of 1 µm to 5 µm, at 5 wt% to 30 wt%;
a second high-impact polystyrene (HIPS) having an average rubber particle diameter of 0.1 µm to 1 µm, at 25 wt% to 60 wt%;
a conductive filler at 1 wt% to 15 wt%;
a rubber component at 4 wt% to 20 wt%; and
an olefin-based polymer at 4 wt% to 20 wt%,
wherein the conductive filler is a mixture of a carbon nanotube and a carbon black mixed in a weight ratio of 1:1 to 6;
wherein the rubber component and the olefin-based polymer are mixed in a weight ratio of 1:1 to 3.

2. The electrically conductive resin composition of claim 1, wherein the rubber component is one selected from the group consisting of butadiene rubber, isoprene rubber, styrene-butadiene-styrene rubber, styrene-isoprene-styrene rubber, acrylonitrile-butadiene rubber, styrene-butadiene rubber, ethylene-propylene rubber, styrene-ethylene-butadiene-styrene rubber, and a mixture of two or more thereof.

3. The electrically conductive resin composition of claim 2, wherein the rubber component is a mixture of styrene-butadiene-styrene rubber and styrene-ethylene-butadiene-styrene rubber, wherein the styrene-butadiene-styrene rubber and the styrene-ethylene-butadiene-styrene rubber are mixed in a weight ratio of 1:1 to 3.

4. The electrically conductive resin composition of claim 1, further comprising polystyrene.

5. The electrically conductive resin composition of claim 4, which contains the polystyrene in an amount of 10 wt% to 30 wt% based on the total weight of the conductive resin composition.

6. The electrically conductive resin composition of claim 1, wherein the olefin-based polymer is one selected from the group consisting of low-density polyethylene, linear low-density polyethylene, high-density polyethylene, a polyethylene copolymer, polypropylene, polymethylpentene, polyphenylene sulfide, and a mixture of two or more thereof.

7. The electrically conductive resin composition of claim 1, further comprising a metal salt and stearamide.

8. The electrically conductive resin composition of claim 7, wherein the metal salt is one selected from the group consisting of calcium stearate, barium stearate, lead stearate, magnesium stearate, zinc stearate, and a mixture of two or more thereof.

9. The electrically conductive resin composition of claim 7, which contains the metal salt in an amount of 1 wt% to 5 wt% and the stearamide in an amount of 1 wt% to 5 wt% based on the total weight of the conductive resin composition.

10. The electrically conductive resin composition of claim 1, further comprising a silicone oil.

11. The electrically conductive resin composition of claim 10, wherein the silicone oil is one selected from the group consisting of a dimethyl silicone oil, a methylhydrogen silicone oil, an ester-modified silicone oil, a hydroxy silicone oil, a carbinol-modified silicone oil, a vinyl silicone oil, a silicone acrylate, and a mixture of two or more thereof.

12. The electrically conductive resin composition of claim 10, which contains the silicone oil in an amount of 0.5 wt% to 5 wt% based on the total weight of the electrically conductive resin composition.

13. A method of preparing an electrically conductive resin composition according to claim 1, the method comprising:
(a) preparing a masterbatch by mixing a first high-impact polystyrene (HIPS) having an average rubber particle diameter of 1 µm to 5 µm with a carbon nanotube; and
(b) mixing the masterbatch with a second high-impact polystyrene (HIPS) having an average rubber particle diameter of 0.1 µm to 1 µm, a conductive filler , a rubber component, and an olefin-based polymer,
Wherein the electrically conductive composition comprises 5 to 30% by weight of the first HIPS, 25 to 60% by weight of the second HIPS, 1 to 15% by weight of the conductive filler, 4 to 20% by weight of the rubber component, 4 to 20% by weight of the olefin-based polymer,
Wherein the conductive filler is a mixture of carbon nanotube and the carbon black mixed in a weight ration of 1:1 to 6,
Wherein the rubber component and the olefin-based polymer are mixed in a weight ration of 1:1 to 3.

14. The method of claim 13, further comprising, during (b), further adding polystyrene.

15. The method of claim 14, further comprising, during (a), further adding a metal salt and a silicone oil.

16. The method of claim 14, further comprising, during (b), further adding stearamide.

## Patentansprüche

1. Elektrisch leitfähige Harzzusammensetzung umfassend:
ein erstes hochschlagfestes Polystyrol (HIPS), das einen durchschnittlichen Gummipartikeldurchmesser von 1 µm bis 5 µm, bei 5 Gew.-% bis 30 Gew.-%, aufweist;
ein zweites hochschlagfestes Polystyrol (HIPS), das einen durchschnittlichen Gummipartikeldurchmesser von 0,1 µm bis 1 µm, bei 25 Gew.-% bis 60 Gew.-%, aufweist;
einen leitfähigen Füllstoff bei 1 Gew.-% bis 15 Gew.-%;
eine Gummikomponente bei 4 Gew.-% bis 20 Gew.-%; und
ein Olefin-basiertes Polymer bei 4 Gew.-% bis 20 Gew.-%,
wobei der leitfähige Füllstoff eine Mischung aus einem Kohlenstoffnanoröhrchen und einem Ruß ist, die in einem Gewichtsverhältnis von 1:1 bis 6 gemischt sind;
wobei die Gummikomponente und das Olefin-basierte Polymer in einem Gewichtsverhältnis von 1:1 bis 3 gemischt sind.

2. Elektrisch leitfähige Harzzusammensetzung nach Anspruch 1, wobei die Gummikomponente eine ist, die aus der Gruppe ausgewählt ist, die aus Butadien-Gummi, Isopren-Gummi, Styrol-Butadien-Styrol-Gummi, Styrol-Isopren-Styrol-Gummi, AcrylnitrilButadien-Gummi, Styrol-Butadien-Gummi, Ethylen-Propylen-Gummi, Styrol-Ethylen-Butadien-Styrol-Gummi, und einer Mischung aus zwei oder mehr davon, besteht.

3. Elektrisch leitfähige Harzzusammensetzung nach Anspruch 2, wobei die Gummikomponente eine Mischung aus Styrol-Butadien-Styrol-Gummi und Styrol-Ethylen-Butadien-Styrol-Gummi ist, wobei der Styrol-Butadien-Styrol-Gummi und der Styrol-Ethylen-Butadien-Styrol-Gummi in einem Gewichtsverhältnis von 1:1 bis 3 gemischt sind.

4. Elektrisch leitfähige Harzzusammensetzung nach Anspruch 1, ferner umfassend Polystyrol.

5. Elektrisch leitfähige Harzzusammensetzung nach Anspruch 4, die das Polystyrol in einer Menge von 10 Gew.-% bis 30 Gew.-% basierend auf dem Gesamtgewicht der leitfähigen Harzzusammensetzung enthält.

6. Elektrisch leitfähige Harzzusammensetzung nach Anspruch 1, wobei das Olefin-basierte Polymer eines ist, das aus der Gruppe ausgewählt ist, die aus Polyethylen niedriger Dichte, linearem Polyethylen niedriger Dichte, Polyethylen hoher Dichte, einem Polyethylen-Copolymer, Polypropylen, Polymethylpenten, Polyphenylensulfid, und einer Mischung aus zwei oder mehr davon, besteht.

7. Elektrisch leitfähige Harzzusammensetzung nach Anspruch 1, ferner umfassend ein Metallsalz und Stearamid.

8. Elektrisch leitfähige Harzzusammensetzung nach Anspruch 7, wobei das Metallsalz eines ist, das aus der Gruppe ausgewählt ist, die aus Kalziumstearat, Bariumstearat, Bleistearat, Magnesiumstearat, Zinkstearat, und einer Mischung aus zwei oder mehr davon, besteht.

9. Elektrisch leitfähige Harzzusammensetzung nach Anspruch 7, die das Metallsalz in einer Menge von 1 Gew.-% bis 5 Gew.-% und das Stearamid in einer Menge von 1 Gew.-% bis 5 Gew.-% basierend auf dem Gesamtgewicht der leitfähigen Harzzusammensetzung enthält.

10. Elektrisch leitfähige Harzzusammensetzung nach Anspruch 1, ferner umfassend ein Silikonöl.

11. Elektrisch leitfähige Harzzusammensetzung nach Anspruch 10, wobei das Silikonöl eines ist, das aus der Gruppe ausgewählt ist, die aus einem Dimethylsilikonöl, einem Methylhydrogensilikonöl, einem Ester-modifizierten Silikonöl, einem Hydroxysilikonöl, einem Karbinol-modifizierten Silikonöl, einem Vinylsilikonöl, einem Silikonacrylat, und einer Mischung aus zwei oder mehr davon, besteht.

12. Elektrisch leitfähige Harzzusammensetzung nach Anspruch 10, die das Silikonöl in einer Menge von 0,5 Gew.-% bis 5 Gew.-% basierend auf dem Gesamtgewicht der elektrisch leitfähigen Harzzusammensetzung enthält.

13. Verfahren zum Herstellen einer elektrisch leitfähigen Harzzusammensetzung nach Anspruch 1, wobei das Verfahren umfasst:
(a) Herstellen eines Masterbatches durch Mischen eines ersten hochschlagfesten Polystyrols (HIPS), das einen durchschnittlichen Gummipartikeldurchmesser of 1 µm to 5 µm aufweist, mit einem Kohlenstoffnanoröhrchen; und
(b) Mischen des Masterbatches mit einem zweiten hochschlagfesten Polystyrol (HIPS), das einen durchschnittlichen Gummipartikeldurchmesser von 0,1 µm bis 1 µm aufweist, eines leitfähigen Füllstoffs, einer Gummikomponente, und eines Olefin-basierten Polymers,
wobei die elektrisch leitfähige Zusammensetzung 5 bis 30 Gew.-% des ersten HIPS, 25 bis 60 Gew.-% des zweiten HIPS, 1 bis 15 Gew.-% des leitfähigen Füllstoffs, 4 bis 20 Gew.-% der Gummikomponente, 4 bis 20 Gew.-% des Olefin-basierten Polymers umfasst,
wobei der leitfähige Füllstoff eine Mischung eines Kohlenstoffnanoröhrchens und eines Rußes ist, die in einem Gewichtsverhältnis von 1:1 bis 6 gemischt sind,
wobei die Gummikomponente und das Olefin-basierte Polymer in einem Gewichtsverhältnis von 1:1 bis 3 gemischt sind.

14. Verfahren nach Anspruch 13, ferner umfassend, während (b), ein weiteres Hinzufügen von Polystyrol.

15. Verfahren nach Anspruch 14, ferner umfassend, während (a), ein weiteres Zufügen eines Metallsalzes und eines Silikonöls.

16. Verfahren nach Anspruch 14, ferner umfassend, während (b), ein weiteres Hinzufügen von Stearamid.

## Revendications

1. Composition de résine électriquement conductrice comprenant :
un premier polystyrène choc (HIPS) ayant un diamètre moyen de particules de caoutchouc de 1 µm à 5 µm, de 5 % en poids à 30 % en poids ;
un second polystyrène choc (HIPS) ayant un diamètre moyen de particules de caoutchouc de 0,1 µm à 1 µm, de 25 % en poids à 60 % en poids ;
une charge conductrice de 1 % en poids à 15 % en poids ;
un composant caoutchouc de 4 % en poids à 20 % en poids ; et
un polymère à base d'oléfine de 4 % en poids à 20 % en poids,
dans laquelle la charge conductrice est un mélange de nanotubes de carbone et de noir de carbone mélangés selon un rapport en poids de 1 : 1 à 6 ;
dans laquelle le composant caoutchouc et le polymère à base d'oléfine sont mélangés dans un rapport en poids de 1 : 1 à 3.

2. Composition de résine électriquement conductrice selon la revendication 1, dans laquelle le composant caoutchouc est sélectionné parmi le groupe constitué de caoutchouc butadiène, caoutchouc isoprène, caoutchouc styrène-butadiène-styrène, caoutchouc styrène-isoprène-styrène, caoutchouc acrylonitrile-butadiène, caoutchouc styrène-butadiène, caoutchouc éthylène-propylène, caoutchouc styrène-éthylène-butadiène-styrène, et d'un mélange de deux ou plusieurs d'entre eux.

3. Composition de résine électriquement conductrice selon la revendication 2, dans laquelle le composant caoutchouc est un mélange de caoutchouc styrène-butadiène-styrène et de caoutchouc styrène-éthylène-butadiène-styrène, dans laquelle le caoutchouc styrène-butadiène-styrène et le caoutchouc styrène-éthylène-butadiène-styrène sont mélangés dans un rapport en poids de 1 : 1 à 3.

4. Composition de résine électriquement conductrice selon la revendication 1, comprenant en outre du polystyrène.

5. Composition de résine électriquement conductrice selon la revendication 4, contenant une teneur en polystyrène de 10 % en poids à 30 % en poids, par rapport au poids total de la composition de résine électriquement conductrice.

6. Composition de résine électriquement conductrice selon la revendication 1, dans laquelle le polymère à base d'oléfine est sélectionné parmi le groupe constitué de polyéthylène basse densité, polyéthylène linéaire basse densité, polyéthylène haute densité, copolymère de polyéthylène, polypropylène, polyméthylpentène, polysulfure de phénylène, et d'un mélange de deux ou plus d'entre eux.

7. Composition de résine électriquement conductrice selon la revendication 1, qui comprend en outre un sel métallique et un stéaramide.

8. Composition de résine électriquement conductrice selon la revendication 7, dans laquelle le sel métallique est sélectionné parmi le groupe constitué de stéarate de calcium, stéarate de baryum, stéarate de plomb, stéarate de magnésium, stéarate de zinc, et d'un mélange d'au moins deux d'entre eux.

9. Composition de résine électriquement conductrice selon la revendication 7, contenant une teneur en sel métallique de 1 % en poids à 5 % en poids et une teneur en stéaramide de 1 % en poids à 5 % en poids, par rapport au poids total de la composition de résine électriquement conductrice.

10. Composition de résine électriquement conductrice selon la revendication 1, comprenant en outre une huile de silicone.

11. Composition de résine électriquement conductrice selon la revendication 10, dans laquelle l'huile de silicone est sélectionnée parmi le groupe constitué d'huile de silicone diméthyle, d'huile de silicone méthylhydrogène, d'huile de silicone modifiée par ester, d'huile de silicone hydroxy, d'huile de silicone modifiée par carbinol, d'huile de silicone vinylique, d'acrylate de silicone, et d'un mélange de deux ou plus d'entre eux.

12. Composition de résine électriquement conductrice selon la revendication 10, contenant une teneur en huile de silicone de 0,5 % en poids à 5 % en poids, par rapport au poids total de la composition de résine électriquement conductrice.

13. Procédé de préparation d'une composition de résine électriquement conductrice selon la revendication 1, le procédé comprenant :
(a) la préparation d'un mélange maître en mélangeant un premier polystyrène choc (HIPS) ayant un diamètre moyen de particules de caoutchouc de 1 µm à 5 µm avec un nanotube de carbone ; et
(b) le mélange du mélange maître avec un second polystyrène choc (HIPS) ayant un diamètre moyen de particules de caoutchouc de 0,1 µm à 1 µm, une charge conductrice, un composant caoutchouc et un polymère à base d'oléfine,
dans lequel la composition de résine électriquement conductrice comprend de 5 % à 30 % en poids du premier HIPS, 25 à 60 % en poids du second HIPS, 1 % à 15 % en poids de la charge conductrice, 4% à 20 % en poids du composant caoutchouc et 4 % à 20 % en poids du polymère à base d'oléfine,
dans lequel la charge conductrice est un mélange de nanotubes de carbone et de noir de carbone mélangés dans un rapport en poids de 1 : 1 à 6,
dans lequel le composant caoutchouc et le polymère à base d'oléfine sont mélangés dans un rapport en poids de 1 : 1 à 3.

14. Procédé selon la revendication 13, comprenant en outre, au cours de l'étape (b), l'ajout additionnel de polystyrène.

15. Procédé selon la revendication 14, comprenant en outre, au cours de l'étape (a), l'ajout additionnel d'un sel métallique et d'une huile de silicone.

16. Procédé selon la revendication 14, comprenant en outre, au cours de l'étape (b), l'ajout additionnel de stéaramide.
